# EUROPEAN PATENT APPLICATION

(11) **EP 4 468 094 A1**
(43) Date of publication of application: **27.11.2024**
(21) Application number: 24177230.0
(22) Date of filing: 22.05.2024
(51) Int. Cl.: G05B 19/042

(54) **PLANT CONTROL SYSTEM AND PLANT CONTROL METHOD**

(30) Priority: 24.05.2023 JP 2023085633
(71) Applicant: Yokogawa Electric Corporation, Tokyo 180-8750 (JP)
(72) Inventor: YAJIMA, Hideharu, Musashino-shi, Tokyo, 180-8750 (JP); HASEGAWA, Yuuzou, Musashino-shi, Tokyo, 180-8750 (JP); ITO, Kazuyuki, Musashino-shi, Tokyo, 180-8750 (JP)
(74) Representative: Winter, Brandl - Partnerschaft mbB

(57) **Abstract**

A controller 10 includes a main control unit 11 that generates first output data for controlling an operation instrument 42 based on reception data that is received from a measuring instrument 41. An IO device 20 includes an auxiliary control unit 23 that generates second output data for controlling the operation instrument 42 based on the reception data received from the measuring instrument 41, an input/output unit 22 that relays communication between both the main control unit 11 and the auxiliary control unit 23 and both the measuring instrument 41 and the operation instrument 42, and a management unit 21 that controls the input/output unit 22 such that, when the cooperation has been impaired, the second output data generated by the auxiliary control unit 23 is transmitted to the operation instrument 42.

## Description

### CROSS-REFERENCE TO RELATED APPLICATION

The present application claims priority to and incorporates by reference the entire contents of Japanese Patent Application No. 2023-085633 filed in Japan on May 24, 2023.

### BACKGROUND OF THE INVENTION

### 1. Field of the Invention

The present invention relates to a plant control system and a plant control method.

### 2. Description of the Related Art

In various plants using petroleum, petrochemicals, chemical substances, gas, or the like, a plant control system that controls various state quantities (for example, pressure, temperature, a flow rate, etc.) in an industrial process has been conventionally built, a high level automatic operation has been implemented. The plant control system is, for example, a distributed control system (DCS), or the like. In the plant control system, field equipment (a measuring instrument and operation equipment) that is referred to as a field instrument is provided. Then, the plant control system acquires measurement result obtained by various measuring instruments, such as a flowmeter and a thermometer, calculates an amount of operation of an operation instrument, such as a valve or an actuator, in accordance with the measurement result, and controls the operation instrument in accordance with the amount of operation.

To perform the above described control, the plant control system has an input/output function for exchanging data with the field instrument, and a control function for performing a control arithmetic operation by using the input data and generating output data. In addition, in the plant control system, both of the input/output function and the control function are operated in cooperation with each other, so that a stable operation of the plant is able to be implemented. A method of implementing the plant control system is able to be selectively used between a case in which the plant control system is implemented by a device having an integrated function of the input/output function and the control function and a case in which the plant control system is implemented by devices in a separated manner by using one of the devices having an input/output function and the other of the devices having the control function. Here, in the plant control device constituted to have an input/output function and control function in a separated manner, a device that has the input/output function is referred to as an input/output (IO) device, and a device that has the control function is referred to as a controller.

In the plant control system, by allocating the input/output function and the control function to different devices, the following merits are obtained. For one thing, as an example of the merit, it is possible to easily increase the capacity of the control function by improving the performance of the controller based on a practical use of an information technology (IT). In addition, as another example of the merit, it is possible to install the controller in a safe environment, such as an instrument panel room, it is possible to implement scalable expand of the controller and the IO device, and it is possible to increase an ability of maintenance as a result of small scale and high distribution due to separation of nodes.

Furthermore, as a management method of a plant facility, the following technology has been proposed. For example, there is a technology for calculating a first control value of a second device on the basis of a measured process value of a first device and a set parameter, comparing a second control value that is related to the second device and that has been calculated by another device with the first control value, and deciding whether or not the first control value is set to the second device.

Patent Document 1: Japanese Laid-open Patent Publication No. 2019-61661

However, in the plant control system, if the input/output function and the control function are allocated to different devices, there may possibly be a case in which it is not possible to perform a stable plant operation in the case where the cooperation between the input/output function and the control function is impaired. The following reasons are conceivable as a reason for the impairment of the cooperation. For example, a path becomes more complicated as a physical distance between the input/output function and the control function is increased, so that the path is more likely to be disconnected. Furthermore, as a use of the IT, such as a personal computer (PC) for a server or a cloud computing system, is increased, a risk of impairment of the cooperation is increased due to a failure occurring in the devices. In addition, frequency of maintenance of hardware and software having highly developed control function is increased, but it is conceivable that an operation of each of the devices is temporarily stopped in order to perform the maintenance, and the cooperation is lost in such a case.

Then, in the case where the cooperation between the input/output function and the control function has been impaired, a process of stopping the operation and shifting the plant to a safe state is performed. In a case of a temporary halt of the plant, a large opportunity loss occurs until the operation is again started. As described above, conventionally, in the plant control system, in the case where the input/output function and the control function are allocated to different devices, it is difficult to implement the stable plant operation.

Furthermore, with the technology for comparing the calculated control value with the control value that has been calculated by the other device and deciding whether or not which of the value is to be used for the control, it is possible to increase reliability of the control value, but it is difficult to cope with a case in which the cooperation between the input/output function and the control function has been impaired. Therefore, even when this technology is used, it is also difficult to implement the stable plant operation.

An aspect of an embodiment of the present invention implements a stable plant operation.

### SUMMARY OF THE INVENTION

It is an object of the present invention to at least partially solve the problems in the conventional technology.

According to an aspect of an embodiment, a plant control system includes, a controller, and an input/output device, both of which are operated in cooperation with each other, wherein the controller includes a main control unit that generates first output data based on reception data received from a first instrument, the input/output device includes an auxiliary control unit that generates second output data based on the reception data received from the first instrument, an input/output unit that relays communication between both the main control unit and the auxiliary control unit and both the first instrument and a second instrument, and a management unit that controls, when the cooperation has been impaired, the input/output unit such that the second output data is transmitted to the second instrument.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram of a plant control system according to an embodiment;
FIG. 2 is a sequence diagram of an operation instrument control process performed when a controller is in a normal state;
FIG. 3 is a sequence diagram of an operation instrument control process performed when the controller is in an abnormal state;
FIG. 4 is a sequence diagram of an operation instrument control process performed at the time of maintenance of the controller;
FIG. 5 is a sequence diagram of an operation instrument control process performed at the time of a return of the controller from the abnormal state; and
FIG. 6 is a diagram of a hardware configuration of a computer.

### DETAILED DESCRIPTION OF THE PREFERRED EMBODIMENTS

Preferred embodiments of a plant control system and a plant control method will be described below with reference to the drawings. Furthermore, the same components are denoted by the same reference numerals and an overlapping description will be omitted. In addition, each of the embodiments can be used in any appropriate combination as long as they do not conflict with each other.

### Overall configuration

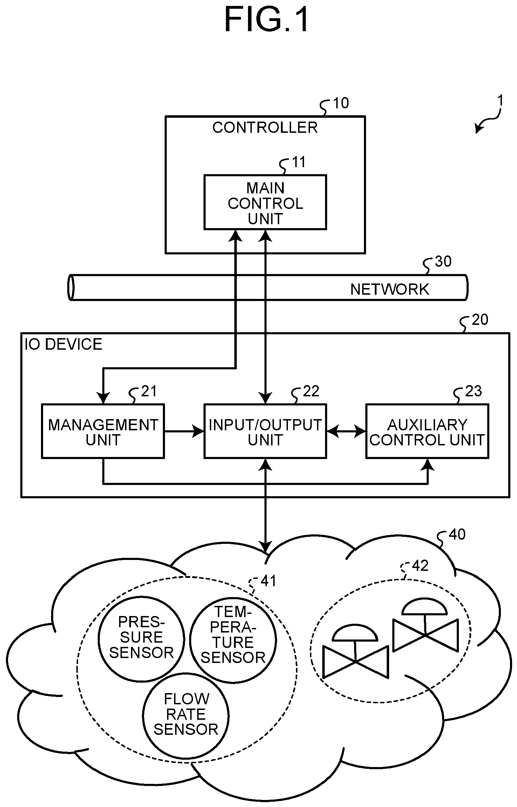

FIG. 1 is a block diagram of a plant control system according to an embodiment. A plant control system 1 acquires information that indicates a state of a plant as input data. Then, the plant control system 1 performs a control arithmetic operation by using the input data, and generates output data. After that, the plant control system 1 controls the plant by using the generated output data.

The plant control system 1 according to the present embodiment includes a controller 10 and an IO device 20. The controller 10 and the IO device 20 are connected via a network 30. Furthermore, the IO device 20 is connected to a group of field instruments 40 that includes various kinds of a group of measuring instruments 41 and a group of operation instruments 42. The group of measuring instruments 41 includes, for example, a pressure sensor, a temperature sensor, a flow rate sensor, and the like. Furthermore, the group of operation instruments 42 includes a valve, an actuator, and the like. The each of the measuring instruments 41 corresponds to one example of a "first instrument", and the each of operation instruments 42 corresponds to one example of a "second instrument".

The controller 10 is implemented by, for example, a distributed control system (DCS). The controller 10 has a main control function for periodically receiving, as input data from the IO device 20, measurement results that are obtained by the each of measuring instruments 41 included in the group of field instruments 40 and that corresponds to information that indicates a state of the plant, and generating output data by performing the control arithmetic operation by using the received input data. Furthermore, the controller 10 transmits the output data to the each of operation instruments 42 by way of the IO device 20.

The controller 10 is able to build a control loop that performs centralized control of the plurality of IO devices 20 by using the main control function. As a result of this, the controller 10 is able to implement an efficient control operation of the entire plant across the plurality of IO devices 20.

Constraint of the capacity and a physical arrangement of the controller 10 is reduced by being separated from the IO device 20. As a result of this, the controller 10 is able to decide a control target range and an arrangement location by taking into consideration of throughput, responsiveness, and maintainability.

The IO device 20 is implemented by, for example, a programmable logic controller (PLC). The IO device 20 periodically acquires the measurement results obtained by the each of sensors included in the group of measuring instruments 41 included in the group of field instruments 40 from the group of measuring instruments 41. Then, the IO device 20 transmits the acquired measurement results as the input data to the controller 10 via the network 30. Furthermore, the IO device 20 receives the output data from the controller 10 via the network 30. Then, the IO device 20 transmits the acquired output data to the each of operation instruments 42. The IO device 20 is an input/output device that has the above described input/output function.

Furthermore, in the case where cooperation between the controller 10 and the IO device 20 has been impaired due to a disconnection of communication or the like, the IO device 20 has an auxiliary control function for controlling the each of operation instruments 42 by calculating the output data from the input data instead of the controller 10. If the cooperation with the controller 10 has been recovered, the IO device 20 returns the control of the each of operation instruments 42 to the controller 10, and performs a process of the input/output function. Here, the "cooperation" does not indicate a state in which the controller 10 and the IO device 20 are simply connected and are able to be communicated with each other, but indicates a state in which the controller 10 and the IO device 20 are operable in cooperation with each other by transmitting and receiving data..

The IO device 20 is physically connected to each of the operation instruments 42 that are arranged in various places in the plant, so that the physical arrangements are fixed and are accordingly arranged in various places in the plant in a distributed manner. The IO devices 20 are arranged "in units of control targets" by taking into account improvement of the operation rate of the plant and the aspect of cost. In other words, a unit that is targeted for transmission and reception of data is allocated to each of the IO devices 20. In a description below, a unit of the control target is referred to as a "unit". The unit in the plant is a unit in which mechanisms for performing a group of processes are grouped, and corresponds to a "storage tank", a "pipe arrangement", a "reaction kiln", and the like.

Each of the IO devices 20 is able to build a control loop that is limited to the each of operation instruments 42 that is included in the unit allocated by the auxiliary control function. Each of the IO devices 20 is able to maintain the control by using the auxiliary control function in the range of a scope of the allocated unit, and is able to shift the allocated unit to a safe state by performing a fall back in a case of sensing of danger.

### Controller 10

The controller 10 includes, as illustrated in FIG. 1, a main control unit 11 that has the main control function.

The main control unit 11 receives input data from an input/output unit 22 included in the IO device 20 via the network 30. Then, the main control unit 11 performs the control arithmetic operation by using the application that has been registered in advance, and then, generates output data that includes an output value that is used to control the each of operation instruments 42 from the input data and the output value that is indicated by the output data that has been output last time by the own device. In a description below, the output value that is indicated by the output data that has been output last time by the own device is referred to as an "own last output value". After that, the main control unit 11 transmits the generated output data to the input/output unit 22 included in the IO device 20 via the network 30. Furthermore, the main control unit 11 continuously transmits a state signal, such as a heartbeat, that indicates an own state to a management unit 21 included in the IO device 20.

In both of a case in which the controller 10 is stopped after the controller 10 enters an abnormal state and is then returned after having been repaired and a case in which the controller 10 is stopped due to maintenance and is then returned, the main control unit 11 resumes transmission of the state signal. After that, the main control unit 11 receives, from the management unit 21 included in the IO device 20, feedback about a last output value that is indicated by the last output data that has been calculated by the auxiliary control function held by the IO device 20. In a description below, the last output value received from the management unit 21 is referred to as a "fed back last output value".

Furthermore, the main control unit 11 receives the input data from the input/output unit 22 included in the IO device 20 via the network 30. Then, the main control unit 11 generates the output data by performing the control arithmetic operation by using the received input data and the fed back last output value. As a result of this, the main control unit 11 is able to switch the control function with respect to a bumpless control target received from an auxiliary control unit 23.

Here, the output data that has been generated by the main control unit 11 and that is used for controlling the each of operation instruments 42 corresponds to one example of "first output data". In other words, the main control unit 11 generates the first output data on the basis of the reception data that has been obtained from each of the measuring instruments 41 that corresponds to the first instrument. More specifically, the main control unit 11 receives, as an input, the reception data that has been sent out from the first instrument by way of the input/output unit 22, and outputs, to the each of operation instruments 42 that corresponds to the second instrument, the first output data that has been generated on the basis of each of the pieces of the reception data by way of the input/output unit 22. Furthermore, if a return of the cooperation has been checked by the management unit 21, the main control unit 11 calculates the first output data to be output next time on the basis of the reception data and the second output data that has been fed back from the management unit 21 and that has been output from the input/output unit 22. Here, the output data that is used for controlling the each of operation instruments 42 and that has been generated by the auxiliary control function that is held by the IO device 20 corresponds to one example of "second output data".

### IO device 20

The IO device 20 includes, as illustrated in FIG. 1, the management unit 21 that manages operations of the main control function and the auxiliary control function, the input/output unit 22 that has the input/output function, and the auxiliary control unit 23 that has the auxiliary control function.

The management unit 21 receives the state signal from the main control unit 11 included in the controller 10. The management unit 21 determines whether or not the controller 10 is in a normal state on the basis of the received state signal. For example, the management unit 21 analyzes the received signal and determines whether the controller 10 is in a normal state or in an abnormal state. In addition to this, in the case where the management unit 21 does not receive the state signal any more, the management unit 21 may determine that abnormality has occurred in the controller 10.

If the management unit 21 determines that the controller 10 is in a normal state, the management unit 21 instructs the input/output unit 22 to output the output data that has been received from the main control unit 11 included in the controller 10 to the each of operation instruments 42. In this case, the management unit 21 stops transmission of the output data, which has been generated by an auxiliary control unit 43, to the each of operation instruments 42 to be performed by the input/output unit 22. Furthermore, the management unit 21 provides feedback about the output data that has been generated by the controller 10 and that has been output to the each of operation instruments 42 by the input/output unit 22 to the auxiliary control unit 23 as the last output value. The management unit 21 repeats the feedback about the output data as the last output value provided to the auxiliary control unit 23 every time the input/output unit 22 outputs the output data to the each of operation instruments 42.

In contrast, if the management unit 21 determines that the controller 10 is in an abnormal state, the management unit 21 regards this state as a state in which the cooperation has been impaired and instructs the input/output unit 22 to output the output data received from the auxiliary control unit 23 to the each of operation instruments 42. Furthermore, at the time of maintenance of the controller 10, the management unit 21 receives a notification of maintenance execution from the main control unit 11 included in the controller 10. Then, in the case where a notification of the maintenance execution has been received, the management unit 21 also regards this state as the state in which the cooperation has been impaired, and instructs the input/output unit 22 to output the output data that has been received from the auxiliary control unit 23 to the each of operation instruments 42. In this way, in a case of the abnormal state, in a case of a plan stop due to maintenance or the like, and the like, the management unit 21 determines that the cooperation with the controller 10 has been impaired. Then, in the case where the cooperation with the controller 10 has been impaired, the management unit 21 instructs the input/output unit 22 to output the output data that that has been received from the auxiliary control unit 23 to the each of operation instruments 42. Furthermore, in both of the cases, the management unit 21 stops the transmission of the output data, which has been generated by the main control unit 11, to the each of operation instruments 42 to be performed by the input/output unit 22. In a description below, a case in which it is determined by the auxiliary control unit 23 that the controller 10 is in an abnormal state is referred to as a "case of an abnormal state", whereas a case in which maintenance has been performed on the controller 10 is referred to as a "case of maintenance".

In both of the cases in which the cooperation has been impaired including the case of the abnormal state and the case of the maintenance or the like, if the controller 10 is returned after the completion of a repair or maintenance of the controller 10, the management unit 21 resumes the reception of the state signal from the main control unit 11 included in the controller 10. Then, when the management unit 21 resumes the reception of the state signal and checks that the controller 10 is in a normal state, the management unit 21 provides, to the main control unit 11, feedback about the most recent output data that has been output to the each of operation instruments 42 by the input/output unit 22 as the last output value.

After that, the management unit 21 instructs the input/output unit 22 to return to the state in which the output data received from the main control unit 11 included in the controller 10 is to be output to the each of operation instruments 42. In this case, the management unit 21 stops the transmission of the output data that has been generated by the auxiliary control unit 43 and that is to be output to the each of operation instruments 42 performed by the input/output unit 22. Furthermore, the management unit 21 resumes providing the feedback about the output data that has been output to the each of operation instruments 42 performed by the input/output unit 22 as the last output value to the auxiliary control unit 23.

In this way, if the cooperation has been impaired, the management unit 21 controls the input/output unit 22 such that the second output data is transmitted to the each of operation instruments 42 that corresponds to the second instrument. More specifically, when the management unit 21 checks that the cooperation has been impaired, instructs the input/output unit 22 to output the second output data to the second instrument, and checks a return of the cooperation, the management unit 21 provides feedback about the second output data that has been generated on the basis of each of the pieces of reception data that have been output from the input/output unit 22 to the main control unit 11, and instructs the input/output unit 22 to output the first output data to the second instrument. Furthermore, if the cooperation is maintained, the management unit 21 controls the input/output unit 22 such that the input/output unit 22 transmits the first output data that has been generated by the main control unit 11 to the second instrument. More specifically, the management unit 21 checks that the cooperation is maintained, instructs the input/output unit 22 to output the first output data to the second instrument, and also provides feedback about the first output data that has been output from the input/output unit 22 to the auxiliary control unit 23. Furthermore, the management unit 21 exclusively controls the transmission of the first output data to the second instrument and the transmission of the second output data to the second instrument. Furthermore, if the management unit 21 determines that the main control unit 11 is an abnormal state on the basis of the state information that indicates the state of the plant and that has been acquired from the main control unit 11, or if the management unit 21 receives a notification of a plan stop from the main control unit 11, the management unit 21 determines that the cooperation has been impaired.

The input/output unit 22 receives the measurement results from each of the measuring instruments 41. Then, the input/output unit 22 transmits the acquired measurement results as input data to the main control unit 11 and the auxiliary control unit 23. In this way, the input/output unit 22 relays communication between both the main control unit 11 and the auxiliary control unit 23 and both the group of measuring instruments 41 that corresponds to the first instrument and the group of operation instruments 42 that corresponds to the second instrument.

In the case where the controller 10 is in a normal state, the input/output unit 22 receives, from the management unit 21, an instruction to output the output data that has been received from the main control unit 11 to the each of operation instruments 42. Furthermore, in the case where the controller 10 is in a normal state, the input/output unit 22 receives output data from both the main control unit 11 and the auxiliary control unit 23. In this case, the input/output unit 22 outputs, in accordance with the instruction received from the management unit 21, the output data received from the main control unit 11 to the each of operation instruments 42.

In contrast, in the case where the cooperation with the controller 10 has been impaired as in the case of the abnormal state or in the case of the maintenance or the like, the input/output unit 22 receives, from the management unit 21, an instruction to output the output data that has been received from the auxiliary control unit 23 to the each of operation instruments 42. Then, the input/output unit 22 receives the output data from the auxiliary control unit 23. In this case, the input/output unit 22 outputs, in accordance with the instruction received from the management unit 21, the output data received from the auxiliary control unit 23 to the each of operation instrument 42.

After that, if it is checked that the controller 10 has been returned and is in a normal state, the input/output unit 22 receives, from the management unit 21, an instruction to return to the state in which the output data sent from the main control unit 11 is to be output to the each of operation instrument 42. In this case, the controller 10 has been returned to the normal state, so that the input/output unit 22 receives the output data from both the main control unit 11 and the auxiliary control unit 23. Then, the input/output unit 22 outputs, in accordance with the instruction received from the management unit 21, the output data that has been received from the main control unit 11 to the each of operation instruments 42.

In the case where the controller 10 is in a normal state, the auxiliary control unit 23 receives, from the management unit 21, feedback about the last output value that is indicated by the last output data that has been calculated by the main control unit 11 included in the controller 10. Furthermore, the auxiliary control unit 23 acquires the input data from the input/output unit 22. Then, the auxiliary control unit 23 generates the output data by performing a control arithmetic operation by using the fed back last output value and the input data. After that, the auxiliary control unit 23 outputs the generated output data to the input/output unit 22.

In the case where the cooperation with the controller 10 has been impaired as in the case of an abnormal state or in the case of the maintenance or the like, the auxiliary control unit 23 suspends reception of the feedback about the last output value that is indicated by the output data that has been output to the each of operation instruments 42 by the input/output unit 22. In this case, the auxiliary control unit 23 also acquires the input data from the input/output unit 22. Then, in both of the case of the abnormal state and the case of the maintenance or the like, when the auxiliary control unit 23 generates output data first time after that, the auxiliary control unit 23 generates the output data by performing a control arithmetic operation by using the fed back last output value and the acquired input data. Then, the auxiliary control unit 23 outputs the generated output data to the input/output unit 22. In this way, the auxiliary control unit 23 is able to perform a bumpless switch by generating the output data by performing the control arithmetic operation by using the fed back last output value.

After that, the auxiliary control unit 23 generates output data by performing the control arithmetic operation by using the own last output value and the acquired input data. Then, the auxiliary control unit 23 outputs the generated output data to the input/output unit 22. The auxiliary control unit 23 repeatedly generates the output data by using the own last output value and outputs the generated output data to the input/output unit 22 until the controller 10 has been returned and enters a normal state.

After that, if it is checked that the controller 10 has been returned and is in the normal state, the auxiliary control unit 23 resumes the feedback, provided from the management unit 21, about the last output value that is indicated by the last output data that has been calculated by the main control unit 11 included in the controller 10. Furthermore, the auxiliary control unit 23 acquires the input data from the input/output unit 22. Then, the auxiliary control unit 23 generates output data by performing the control arithmetic operation by using the fed back last output value and the acquired input data. After that, the auxiliary control unit 23 outputs the generated output data to the input/output unit 22.

Here, the auxiliary control unit 23 is able to build a control loop that is limited to a unit. For example, the auxiliary control unit 23 collectively regards a sensor, a valve, and the like provided in a storage tank that corresponds to a unit as a control target, receives the measurement results related to the control target from the each of measuring instruments 41, and performs control of the each of operation instruments 42 on a unit basis. Then, the auxiliary control unit 23 maintains the control in the range of a scope of the unit to be in charge, and preforms a fall back in a case of sensing of danger, so that the auxiliary control unit 23 is able to shift the unit to be in charge to the safe state. In the fall back, the auxiliary control unit 23 shifts the allocated unit to the safe state by maintaining a certain output value as a result of holding the output value or by setting a value on the safe side as an output value. For example, in a case of control of the valve, the auxiliary control unit 23 is able to set the output value to zero in order to completely close the valve as the value on the safe side.

In this way, the auxiliary control unit 23 generates the second output data on the basis of the measurement result that corresponds to the reception data obtained from the each of measuring instruments 41 corresponding to the first instrument. Furthermore, the auxiliary control unit 23 receives the reception data that has been sent out from the first instrument by way of the input/output unit 22 as an input, and outputs the second output data to the second instrument by way of the input/output unit 22. Then, in the case where the cooperation has been impaired, the auxiliary control unit 23 calculates the second output data to be output next time on the basis of the reception data and the second output data that has been output from the input/output unit 22 until a return of the cooperation is checked by the management unit 21. Furthermore, in the case where the cooperation is maintained, the auxiliary control unit 23 calculates the second output data to be output next time on the basis of the reception data and the first output data that has been output from the input/output unit 22 and that has fed back from the management unit 21.

### Operation instrument control process

### Normal state

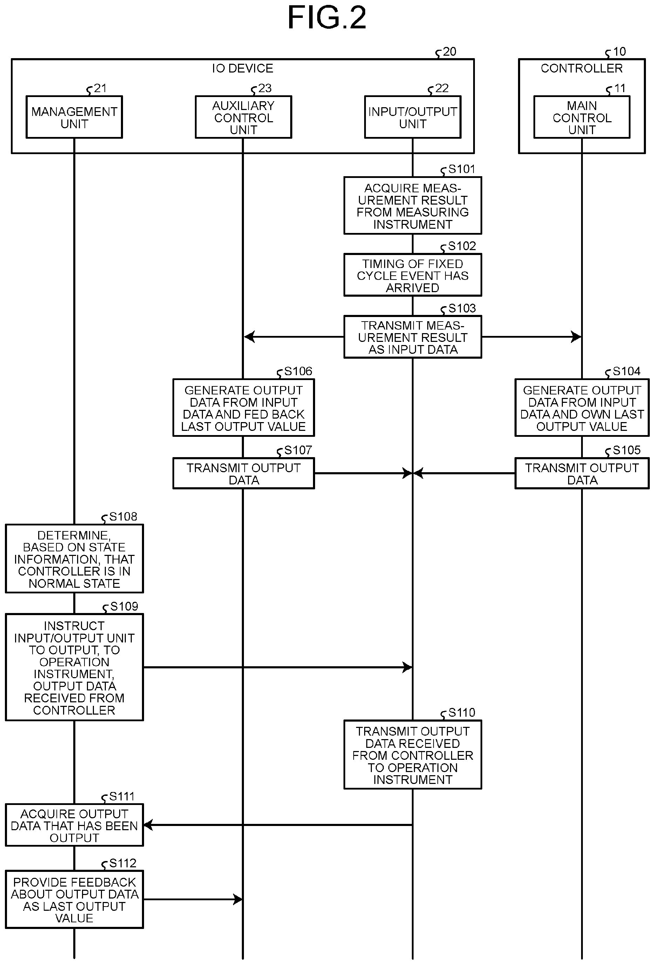

FIG. 2 is a sequence diagram of an operation instrument control process performed when a controller is in a normal state. The arrow that connects each unit indicates transmission and reception of a signal. In the following, the flow of the operation instrument control process performed in the plant control system 1 according to the present embodiment when the controller 10 is in a normal state will be explained with reference to FIG. 2.

The input/output unit 22 acquires the measurement result from the each of measuring instruments 41 that is arranged in the allocated unit at a fast cycle by using an oversampling technique (Step S101). Here, in FIG. 2, the process performed at Step S101 is indicated that the input/output unit 22 acquires the measurement result, but, in practice, the input/output unit 22 continues to acquire the measurement result on the basis of the oversampling technique.

The input/output unit 22 checks that a timing of a fixed cycle event for the operation instrument control process has arrived (Step S102).

Then, the input/output unit 22 transmits the measurement result that corresponds to the latest collected data as the input data to the main control unit 11 included in the controller 10 and the auxiliary control unit 23 (Step S103).

The main control unit 11 receives the input data from the input/output unit 22 included in the IO device 20. Then, the main control unit 11 generates the output data from the input data and the own last output value (Step S104).

Then, the main control unit 11 transmits the generated output data to the input/output unit 22 included in the IO device 20 (Step S105).

Furthermore, the auxiliary control unit 23 receives the input data from the input/output unit 22. Then, the auxiliary control unit 23 generates the output data from the input data and the fed back last output value (Step S 106).

Then, the auxiliary control unit 23 transmits the generated output data to the input/output unit 22 (Step S107).

The management unit 21 determines, on the basis of the state information that received from the controller 10, that the controller 10 is in a normal state (Step S108).

Then, the management unit 21 instructs the input/output unit 22 to output the output data received from the controller 10 to the each of operation instruments 42 (Step S109).

The input/output unit 22 transmits the output data that has been received from the controller 10 to the each of operation instruments 42 in accordance with the instruction received from the management unit 21 (Step S110).

The management unit 21 acquires the output data that has been output from the input/output unit 22 (Step S111).

After that, the management unit 21 provides feedback about the acquired output data as the last output value to the auxiliary control unit 23 (Step S112).

### At time of occurrence of abnormal state

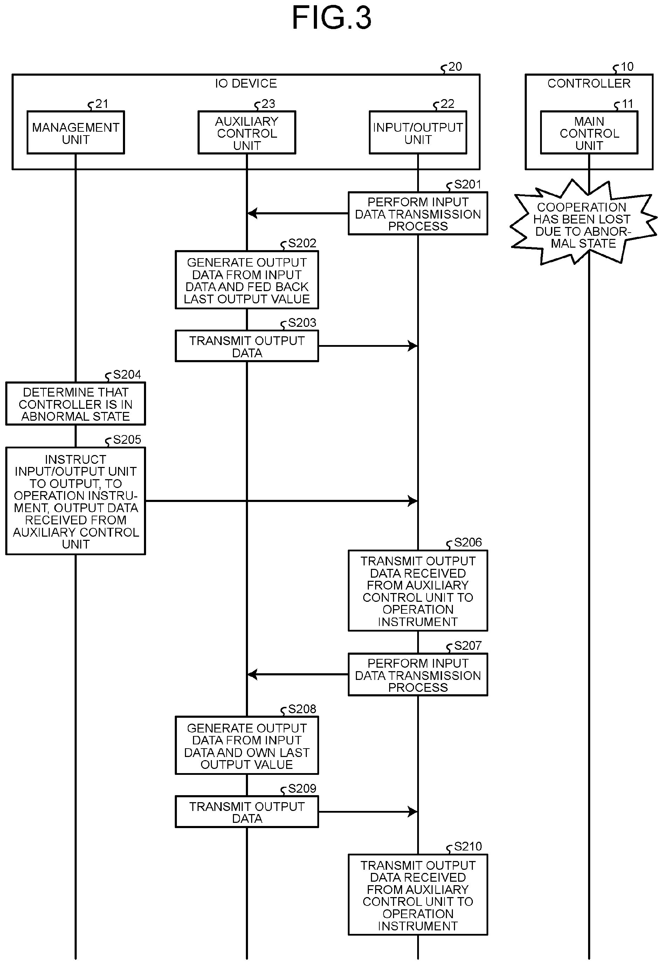

FIG. 3 is a sequence diagram of the operation instrument control process performed when the controller is in an abnormal state. In the following, the flow of the operation instrument control process performed in the plant control system 1 according to the present embodiment when the controller 10 is in an abnormal state will be explained with reference to FIG. 3.

The input/output unit 22 performs an input data transmission process that includes acquisition of the measurement result as the fixed cycle event and transmission of the acquired measurement result as the input data (Step S201). The input data transmission process corresponds to the processes performed at Step S101 to Step S103 illustrated in FIG. 2. However, in this case, the controller 10 is in an abnormal state and the cooperation between the IO device 20 and the controller 10 has been lost, so that the input/output unit 22 does not transmit the input data to the controller 10.

The auxiliary control unit 23 receives the input data from the input/output unit 22 included in the IO device 20. Then, the auxiliary control unit 23 generates the output data from the input data and the fed back last output value (Step S202).

Then, the auxiliary control unit 23 transmits the generated output data to the input/output unit 22 (Step S203).

The management unit 21 determines that the controller 10 is in an abnormal state on the basis of the state information that has been received from the controller 10 (Step S204).

Then, the management unit 21 instructs the input/output unit 22 to output the output data that has been received from the auxiliary control unit 23 to the each of operation instruments 42 (Step S205).

The input/output unit 22 transmits the output data received from the auxiliary control unit 23 to the each of operation instruments 42 in accordance with the instruction received from the management unit 21 (Step S206).

After that, the timing of the fixed cycle event has again arrived, the input/output unit 22 performs the input data transmission process (Step S207).

The auxiliary control unit 23 receives the input data from the input/output unit 22 included in the IO device 20. Then, the auxiliary control unit 23 generates the output data from the input data and the own last output value (Step S208).

Then, the auxiliary control unit 23 transmits the generated output data to the input/output unit 22 (Step S209).

The input/output unit 22 transmits the output data that has been received from the auxiliary control unit 23 to the each of operation instruments 42 in accordance with the instruction received from the management unit 21 (Step S210).

### At time of maintenance

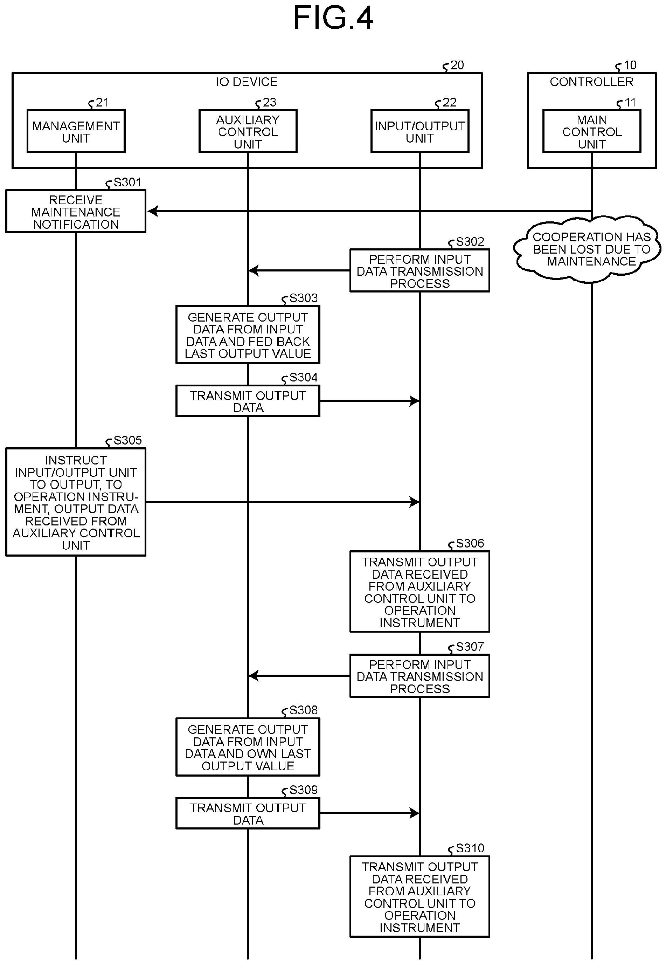

FIG. 4 is a sequence diagram of the operation instrument control process performed at the time of maintenance of the controller. In the following, the flow of the operation instrument control process performed in the plant control system 1 according to the present embodiment at the time of maintenance of the controller 10 will be explained with reference to FIG. 4.

The management unit 21 receives a maintenance notification from the controller 10 (Step S301). After that, the controller 10 is stopped due to the maintenance, the cooperation between the IO device 20 and the controller 10 has been lost.

The input/output unit 22 performs the input data transmission process (Step S302).

The auxiliary control unit 23 receives the input data from the input/output unit 22 included in the IO device 20. Then, the auxiliary control unit 23 generates the output data from the input data and the fed back last output value (Step S303).

Then, the auxiliary control unit 23 transmits the generated output data to the input/output unit 22 (Step S304).

The management unit 21 has already received the maintenance notification from the controller 10, so that the management unit 21 instructs the input/output unit 22 to output the output data that has been received from the auxiliary control unit 23 to the each of operation instruments 42 (Step S305).

The input/output unit 22 transmits the output data that has been received from the auxiliary control unit 23 to the each of operation instruments 42 in accordance with the instruction received from the management unit 21 (Step S306).

After that, if the timing of the fixed cycle event has again arrived, the input/output unit 22 performs the input data transmission process (Step S307).

The auxiliary control unit 23 receives the input data from the input/output unit 22 included in the IO device 20. Then, the auxiliary control unit 23 generates the output data from the input data and the own last output value (Step S308).

Then, the auxiliary control unit 23 transmits the generated output data to the input/output unit 22 (Step S309).

The input/output unit 22 transmits the output data that has been received from the auxiliary control unit 23 to the each of operation instruments 42 in accordance with the instruction received from the management unit 21 (Step S310).

### At time of return from abnormal state

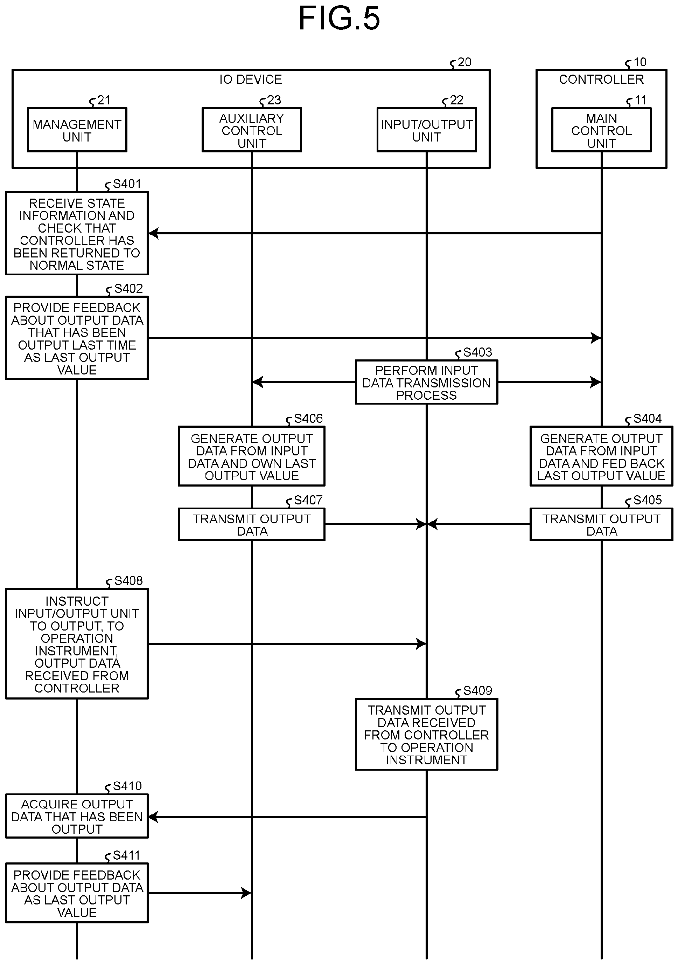

FIG. 5 is a sequence diagram of the operation instrument control process performed at the time of a return of the controller from the abnormal state. In the following, the flow of the operation instrument control process performed by the plant control system 1 according to the present embodiment in the case where the controller 10 has been returned from the abnormal state to the normal state will be explained with reference to FIG. 5.

The management unit 21 receives the state information from the returned controller 10, and checks that the controller 10 has been returned to the normal state (Step S401).

Then, the management unit 21 provides feedback about the output data that has been output by the input/output unit 22 last time as the last output value to the main control unit 11 included in the controller 10 (Step S402).

The input/output unit 22 performs the input data transmission process (Step S403).

The main control unit 11 receives the input data from the input/output unit 22 included in the IO device 20. Then, the main control unit 11 generates the output data from the input data and the fed back last output value (Step S404).

Then, The main control unit 11 transmits the generated output data to the input/output unit 22 included in the IO device 20 (Step S405).

Furthermore, the auxiliary control unit 23 receives the input data from the input/output unit 22. Then, the auxiliary control unit 23 generates the output data from the input data and the own last output value (Step S406).

Then, the auxiliary control unit 23 transmits the generated output data to the input/output unit 22 (Step S407).

The management unit 21 has checked that the controller 10 is in the normal state, so that the management unit 21 instructs the input/output unit 22 to output the output data that has been received from the controller 10 to the each of operation instruments 42 (Step S408).

The input/output unit 22 transmits the output data that has been received from the controller 10 to the each of operation instruments 42 in accordance with the instruction received from the management unit 21 (Step S409).

The management unit 21 acquires the output data that has been output from the input/output unit 22 (Step S410).

After that, the management unit 21 provides feedback about the acquired output data as the last output value to the auxiliary control unit 23 (Step S411).

### Effects

As described above, the plant control system 1 according to the embodiment has a structure in which the controller 10 that has the control function is constituted to be separated from the IO device 20 that has the input/output function. The IO device 20 has the auxiliary control function, and manages the group of field instruments 40 on a unit basis. Then, in the case where the controller 10 is in a normal state, the IO device 20 performs control by transmitting the output data calculated by the controller 10 to the group of field instruments 40, and also, provides feedback about the output data to the auxiliary control function. Then, in the case where the cooperation between the controller 10 and the IO device 20 has been impaired, the IO device 20 performs control by calculating, by using the using the auxiliary control function, the output data by using the fed back last output value and transmitting the calculated output data to the group of field instruments 40. As a result of this, the IO device 20 continues control of the plant on a unit basis. Furthermore, at the time of a return of the controller 10, the controller 10 calculates the output data from the fed back last output value in response to the feedback about the last output value that has been generated by the IO device 20, and continues to control the plant.

As a result of this, even in the case where the cooperation between the input/output function and the control function has been impaired, the plant control system 1 is able to perform a stable plant operation. Here, the main control function and the auxiliary control function are able to be operated by different logics. Furthermore, at a normal time, it is possible to perform the main control function by a server PC with a high cost performance or a general-purpose computer used in a cloud computing environment. Then, at the time of abnormality, it is possible to perform the minimum control that protects the operation by using the auxiliary control function. In the auxiliary control function, it is possible to use the computer in which a cost performance is limited. Furthermore, the auxiliary control function may perform a fall back operation for safely stopping the plant. In this way, as a result of both of the control functions being operated in a linked manner, it is possible to approach to the operation rate at 99.99999% (seven nine), and it is thus possible to guarantee the stable operation of the plant.

Furthermore, with the plant control system 1 according to the present embodiment, it is possible to continue the plant control by using the auxiliary control function even at the time of the maintenance, so that it is possible to easily perform the maintenance of the control function while performing the stable plant operation. For example, as an example, in a refinery plant, the controller 10 is under threat of security due to an open architecture of the controller 10, so that there is a need to perform a periodical update in order to strengthen the security. If the operation of the plant is stopped at an update timing, although depending on the scale of the plant, it often takes about one week to start the stable operation, and 100 million yen or over is estimated as an opportunity loss. In contrast, with the plant control system 1 according to the present embodiment, it is possible to perform an update without stopping the operation of the plant even at the time of an update for strengthen the security, so that it is possible to suppress an opportunity loss.

Furthermore, with the plant control system 1 according to the present embodiment, it is possible to cut an actual cost (Total Expenditure: TOTEX) for a control facility. For example, with the plant control system 1 according to the present embodiment, in a case of an application having a large load variation in the control function, by allowing high load control to be performed in a cloud computing environment, it is possible to reduce the cost needed for the control system. In the case where the application is operated in the cloud computing environment, the cost is charged by a subscription system in accordance with a utilization volume, so that it is possible to reduce the cost. In this way, by allowing the high load control to be performed by the main control function in the cloud computing environment, and by allowing a low load control to be performed by the auxiliary control function at an IO node, it is possible to reduce the TOTEX needed for instrumentation equipment. For example, in a beer manufacturer that performs management based on Batch control, a fermentation process and a storage process are low load control, and the time rate occupied during the process is large. Accordingly, by performing the fermentation process and the storage process by using the auxiliary control function, it is possible to reduce the operating time of the main control function that is operated in the cloud computing environment, and it is thus possible to decrease a running cost. Furthermore, instead of the cloud computing environment, even in the case where a dedicated controller is prepared, if a plurality of manufacturing processes are performed by shifting the processes in order to avoid the main control function from being performed at the same time, the number of the controllers 10 to be prepared for the operation of the main control function is only one, so that it is possible to reduce a capital investment.

### Hardware

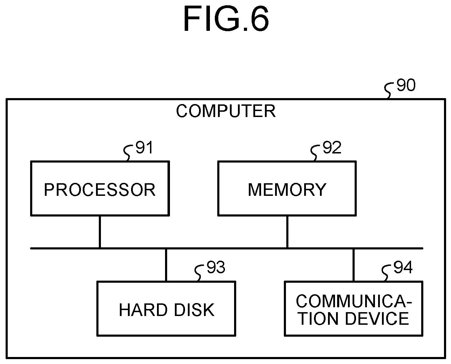

Then, an example of a hardware configuration for implementing the controller 10 and the IO device 20 will be described. FIG. 6 is a diagram of a hardware configuration of a computer. The controller 10 and the IO device 20 are able to be implemented by, for example, a computer 90 illustrated in FIG. 6. The computer 90 includes, as illustrated in FIG. 6, a processor 91, a memory 92, a hard disk 93, and a communication device 94. The processor 91 is connected to the memory 92, the hard disk 93, and the communication device 94 via a bus.

The communication device 94 is a network interface card or the like, and is used for communication with another information processing apparatus. For example, in a case of the controller 10, the communication device 94 is used to perform communication with the IO device 20. Furthermore, in a case of the IO device 20, the communication device 94 is used to perform communication between the controller 10 and the field instrument 40.

The hard disk 93 is an auxiliary storage device. For example, in a case of the controller 10, the hard disk 93 stores therein various programs including a program for implementing the function of the main control unit 11. Furthermore, in a case of the IO device 20, the hard disk 93 stores therein various programs including programs for implementing the functions of the management unit 21, the input/output unit 22, and the auxiliary control unit 23.

The processor 91 reads the various programs stored in the hard disk 93 and executes the programs by loading the read programs in the memory 92. As a result of this, the processor 91 implements, in a case of the controller 10, the function of the main control unit 11. Furthermore, in a case of the IO device 20, the processor 91 implements of the functions of the management unit 21, the input/output unit 22, and the auxiliary control unit 23.

In this way, the computer 90 is operated as an information processing apparatus that performs various processing methods by reading and executing the programs. Furthermore, the computer 90 is also able to implement the same functions as those described above in the embodiment by reading the above described programs from a recording medium by a medium reading device and executing the read programs. In addition, the programs described in another embodiment are not limited to be executed by the computer 90. For example, the present invention may also be similarly used in a case in which another computer or a server executes a program or in a case in which another computer and a server cooperatively execute the program with each other.

The programs may be distributed via a network, such as the Internet. Furthermore, the programs may be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

Some examples of a combination of disclosed technological features will be described below.

According to the present invention, it is possible to implement a stable plant operation by maintaining a control state even when cooperation between the input/output function and the control function has been impaired.

A few exemplary combinations of the technological features disclosed herein are given below.
(1) A plant control system comprising:
   a controller; and
   an input/output device, both of which are operated in cooperation with each other, wherein
   the controller includes a main control unit that generates first output data based on reception data received from a first instrument,
   the input/output device includes
      an auxiliary control unit that generates second output data based on the reception data received from the first instrument,
      an input/output unit that relays communication between both the main control unit and the auxiliary control unit and both the first instrument and a second instrument, and
      a management unit that controls, when the cooperation has been impaired, the input/output unit such that the second output data is transmitted to the second instrument.
(2) The plant control system according to (1), wherein, when the cooperation is maintained, the management unit controls the input/output unit such that the first output data generated by the main control unit is transmitted to the second instrument.
3. The plant control system according to (2), wherein the management unit exclusively controls transmission of the first output data to the second instrument and transmission of the second output data to the second instrument.
4. The plant control system according to any one of (1) to (3), wherein
   the main control unit receives, as an input, the reception data that has been sent out from the first instrument by way of the input/output unit, and outputs the first output data that has been generated based on the reception data to the second instrument by way of the input/output unit, and
   the auxiliary control unit receives, as an input, the reception data that has been sent out from the first instrument by way of the input/output unit, and outputs the second output data that has been generated based on the reception data to the second instrument by way of the input/output unit.
5. The plant control system according to any one of (1) to (4), wherein,
   when the cooperation has been impaired, the management unit instructs the input/output unit to output the second output data to the second instrument, and, when the management unit checks a return of the cooperation, the management unit provides feedback about the second output data output from the input/output unit to the main control unit and instructs the input/output unit to output the first output data to the second instrument,
   the auxiliary control unit calculates the second output data to be output next time based on the reception data and the second output data that has been output from the input/output unit until the return of the cooperation is checked by the management unit, and,
   when the return of the cooperation has been checked by the management unit, the main control unit calculates the first output data to be output next time based on the reception data and the second output data that has been fed back from the management unit and that has been output from the input/output unit.
6. The plant control system according to any one of (1) to (5), wherein,
   when the cooperation is maintained, the management unit instructs the input/output unit to output the first output data to the second instrument, and provides feedback about the first output data output from the input/output unit to the auxiliary control unit,
   the main control unit calculates the first output data to be output next time based on the reception data and the first output data that has been output from the input/output unit, and
   the auxiliary control unit calculates the second output data to be output next time based on the reception data and the first output data that has been fed back from the management unit and that has been output from the input/output unit.
7. The plant control system according to any one of (1) to (6), wherein the management unit determines that the cooperation has been impaired when the management unit determines that the main control unit is in an abnormal state based on state information that indicates a state of a plant acquired from the main control unit, or, the management unit receives a notification of a plan stop from the main control unit.
(8) A plant control method performed by a controller and an input/output device that are operated in cooperation with each other, the plant control method comprising:
   generating, performed by the controller, first output data based on reception data received from a first instrument;
   generating, performed by the input/output device, second output data based on the reception data received from the first instrument;
   acquiring, performed by the input/output device, the first output data from the controller when the cooperation is maintained, and transmitting, performed by the input/output device, the first output data to a second instrument; and
   transmitting, performed by the input/output device, the second output data to the second instrument when the cooperation has been impaired.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A plant control system comprising:
a controller; and
an input/output device, both of which are operated in cooperation with each other, wherein
the controller includes a main control unit that generates first output data based on reception data received from a first instrument,
the input/output device includes
an auxiliary control unit that generates second output data based on the reception data received from the first instrument,
an input/output unit that relays communication between both the main control unit and the auxiliary control unit and both the first instrument and a second instrument, and
a management unit that controls, when the cooperation has been impaired, the input/output unit such that the second output data is transmitted to the second instrument.

2. The plant control system according to claim 1, wherein, when the cooperation is maintained, the management unit controls the input/output unit such that the first output data generated by the main control unit is transmitted to the second instrument.

3. The plant control system according to claim 2, wherein the management unit exclusively controls transmission of the first output data to the second instrument and transmission of the second output data to the second instrument.

4. The plant control system according to any one of claims 1 to 3, wherein
the main control unit receives, as an input, the reception data that has been sent out from the first instrument by way of the input/output unit, and outputs the first output data that has been generated based on the reception data to the second instrument by way of the input/output unit, and
the auxiliary control unit receives, as an input, the reception data that has been sent out from the first instrument by way of the input/output unit, and outputs the second output data that has been generated based on the reception data to the second instrument by way of the input/output unit.

5. The plant control system according to any one of claims 1 to 4, wherein,
when the cooperation has been impaired, the management unit instructs the input/output unit to output the second output data to the second instrument, and, when the management unit checks a return of the cooperation, the management unit provides feedback about the second output data output from the input/output unit to the main control unit and instructs the input/output unit to output the first output data to the second instrument,
the auxiliary control unit calculates the second output data to be output next time based on the reception data and the second output data that has been output from the input/output unit until the return of the cooperation is checked by the management unit, and,
when the return of the cooperation has been checked by the management unit, the main control unit calculates the first output data to be output next time based on the reception data and the second output data that has been fed back from the management unit and that has been output from the input/output unit.

6. The plant control system according to any one of claims 1 to 5, wherein,
when the cooperation is maintained, the management unit instructs the input/output unit to output the first output data to the second instrument, and provides feedback about the first output data output from the input/output unit to the auxiliary control unit,
the main control unit calculates the first output data to be output next time based on the reception data and the first output data that has been output from the input/output unit, and
the auxiliary control unit calculates the second output data to be output next time based on the reception data and the first output data that has been fed back from the management unit and that has been output from the input/output unit.

7. The plant control system according to any one of claims 1 to 6, wherein the management unit determines that the cooperation has been impaired when the management unit determines that the main control unit is in an abnormal state based on state information that indicates a state of a plant acquired from the main control unit, or, the management unit receives a notification of a plan stop from the main control unit.

8. A plant control method performed by a controller and an input/output device that are operated in cooperation with each other, the plant control method comprising:
generating, performed by the controller, first output data based on reception data received from a first instrument;
generating, performed by the input/output device, second output data based on the reception data received from the first instrument;
acquiring, performed by the input/output device, the first output data from the controller when the cooperation is maintained, and transmitting, performed by the input/output device, the first output data to a second instrument; and
transmitting, performed by the input/output device, the second output data to the second instrument when the cooperation has been impaired.
